# EUROPEAN PATENT APPLICATION

(11) **EP 3 034 796 A1**
(43) Date of publication of application: **22.06.2016**
(21) Application number: 15196094.5
(22) Date of filing: 24.11.2015
(51) Int. Cl.: F01D 9/02, F02C 3/14, F04D 29/54, F23R 3/04

(54) **TURBINE ENGINE AND METHOD OF ASSEMBLING THEREOF**

(30) Priority: 15.12.2014 US 201414570838
(71) Applicant: General Electric Company, Schenectady, NY 12345 (US)
(72) Inventor: SILKOWSKI, Peter Daniel, Niskayuna, NY New York 12309-1027 (US)
(74) Representative: Williams, Andrew Richard

(57) **Abstract**

A turbine engine (10) is provided. The turbine engine (10) includes a compressor (14) configured to discharge a flow of air (104) at a first flow angle and a combustor (16) coupled downstream from the compressor (14). The combustor (16) is configured to combust the flow of air (104) with fuel to form a flow of combustion gas (106) discharged from the combustor (16) at a second flow angle. The turbine engine (10) also includes a turbine (18) coupled downstream from the combustor (16). The turbine (18) includes an inlet (122) configured to receive the flow of combustion gas (106) having a flow angle within a predetermined range, wherein the combustor (16) is oriented such that the second flow angle is within the predetermined range.

## Description

### BACKGROUND

The present disclosure relates generally to turbine engines and, more specifically, to an improved turbine engine component architecture utilizing swirling combustion, such as those found in ultra compact combustors.

Rotary machines, such as gas turbines, are often used to generate power with electric generators. Gas turbines, for example, have a gas path that typically includes, in serial-flow relationship, an air intake, a compressor, a combustor, a turbine, and a gas outlet. Compressor and turbine sections include at least one row of circumferentially-spaced rotating buckets or blades coupled within a housing. At least some known turbine engines are used in cogeneration facilities and power plants. Engines used in such applications may have high specific work and power per unit mass flow requirements.

In at least some known gas turbines, a first set of guide vanes is coupled between an outlet of the compressor and an inlet of the combustor. The first set of guide vanes facilitates reducing swirl (i.e., removing bulk swirl) of a flow of air discharged from the compressor such that the flow of air is channeled in a substantially axial direction towards the combustor. A second set of guide vanes is coupled between an outlet of the combustor and an inlet of the turbine. The second set of guide vanes facilitates increasing swirl (i.e., reintroducing bulk swirl) of a flow of combustion gas discharged from the combustor such that flow angle requirements for the inlet of the turbine are satisfied. However, redirecting the flows of air and combustion gas with the first and second sets of guide vanes increases operating inefficiencies of the gas turbine. Moreover, including additional components, such as the first and second sets of guide vanes generally adds weight, cost, and complexity to the gas turbine.

### BRIEF DESCRIPTION

In one aspect, a turbine engine is provided. The turbine engine includes a compressor configured to discharge a flow of air at a first flow angle and a combustor coupled downstream from the compressor. The combustor is configured to combust the flow of air with fuel to form a flow of combustion gas discharged from the combustor at a second flow angle. The turbine engine also includes a turbine coupled downstream from the combustor. The turbine includes an inlet configured to receive the flow of combustion gas having a flow angle within a predetermined range, wherein the combustor is oriented such that the second flow angle is within the predetermined range.

In another aspect, a method of assembling a turbine engine is provided. The method includes coupling a combustor downstream from a compressor configured to discharge a flow of air at a first flow angle. The combustor is configured to combust the flow of air with fuel to form a flow of combustion gas configured to discharge from the combustor at a second flow angle. The method also includes coupling a turbine downstream from the combustor, the turbine comprising an inlet configured to receive the flow of combustion gas from the combustor having a flow angle within a predetermined range, and orienting the combustor such that the second flow angle is within the predetermined range.

### DRAWINGS

These and other features, aspects, and advantages of the present disclosure will become better understood when the following detailed description is read with reference to the accompanying drawings in which like characters represent like parts throughout the drawings, wherein:
FIG. 1 is a schematic illustration of an exemplary gas turbine engine;
FIG. 2 is an enlarged schematic illustration of an exemplary combustion assembly that may be used with the gas turbine engine shown in FIG. 1;
FIG. 3 is a schematic illustration of an exemplary flow path of the combustion assembly along line 3-3 shown in FIG. 2;
FIG. 4 is an enlarged schematic illustration of an alternative combustion assembly that may be used with the gas turbine engine shown in FIG. 1;
FIG. 5 is a schematic illustration of an exemplary flow path of the combustion assembly along line 5-5 shown in FIG. 4; and
FIG. 6 is a schematic illustration of the flow path shown in FIG. 3 along line 6-6 shown in FIG. 3.

Unless otherwise indicated, the drawings provided herein are meant to illustrate features of embodiments of the disclosure. These features are believed to be applicable in a wide variety of systems comprising one or more embodiments of the disclosure. As such, the drawings are not meant to include all conventional features known by those of ordinary skill in the art to be required for the practice of the embodiments disclosed herein.

### DETAILED DESCRIPTION

In the following specification and the claims, reference will be made to a number of terms, which shall be defined to have the following meanings.

The singular forms "a", "an", and "the" include plural references unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value. Here and throughout the specification and claims, range limitations may be combined and/or interchanged. Such ranges are identified and include all the sub-ranges contained therein unless context or language indicates otherwise.

Embodiments of the present disclosure relate to turbine engines and methods of assembling thereof. More specifically, the turbine engines described herein include a combustor that operates with bulk swirl flow of combustion gas channeled towards an inlet of a turbine. The turbine generally includes at least one row of rotating buckets, or rotor blades, coupled to a hub in a fixed orientation and the flow of combustion gas channeled towards the turbine needs to have a flow angle within a predetermined range to ensure the bulk swirl requirements at the inlet of the turbine are satisfied. As such, an orientation of the bulk swirl combustor is selected to ensure the flow of combustion gas discharged towards the turbine has a flow angle within the predetermined range. Leveraging bulk swirl combustors to satisfy flow angle requirements of the turbine enables removal of one or both of guide vanes and turbine nozzles positioned at opposing ends of the combustor. Moreover, removing turbine nozzles from the turbine engine reduces the complexity of the turbine engine by eliminating component cooling requirements with compressor bleed air. As such, a length of the turbine is decreased, a weight of the turbine engine is reduced, and turbine efficiency is increased.

As used herein, the terms "axial" and "axially" refer to directions and orientations that extend substantially parallel to a centerline of the turbine engine. Moreover, the terms "radial" and "radially" refer to directions and orientations that extend substantially perpendicular to the centerline of the turbine engine. In addition, as used herein, the terms "circumferential" and "circumferentially" refer to directions and orientations that extend arcuately about the centerline of the turbine engine. It should also be appreciated that the term "fluid" as used herein includes any medium or material that flows, including, but not limited to, air, gas, liquid and steam.

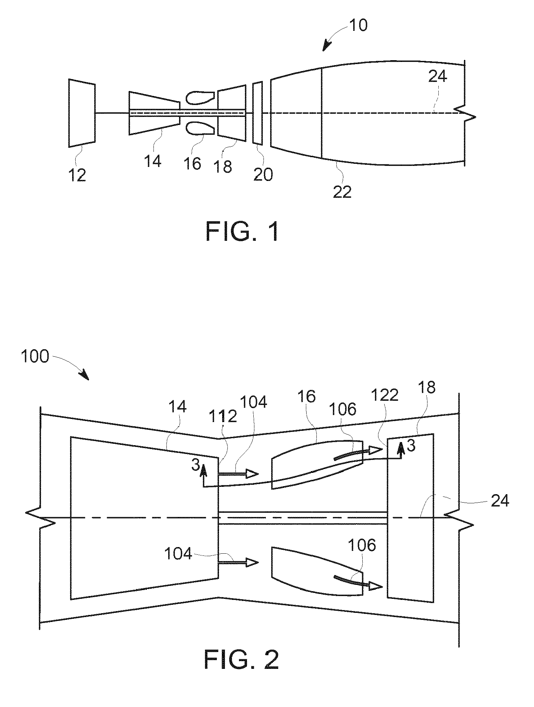

FIG. 1 is a schematic illustration of a gas turbine engine 10 including a low pressure compressor 12, a high pressure compressor 14, and a combustor 16 coupled downstream from high pressure compressor 14. Gas turbine engine 10 also includes a high pressure turbine 18 coupled downstream from combustor 16, a low pressure turbine 20 coupled downstream from high pressure turbine 18, and a power turbine 22 coupled downstream from low pressure turbine 20.

In operation, air flows through low pressure compressor 12 and compressed air is supplied from low pressure compressor 12 to high pressure compressor 14. The compressed air is discharged towards combustor 16 and mixed with fuel to form a flow of combustion gas discharged towards turbines 18 and 20. The flow of combustion gas drives turbines 18 and 20 about a centerline 24 of gas turbine engine 10.

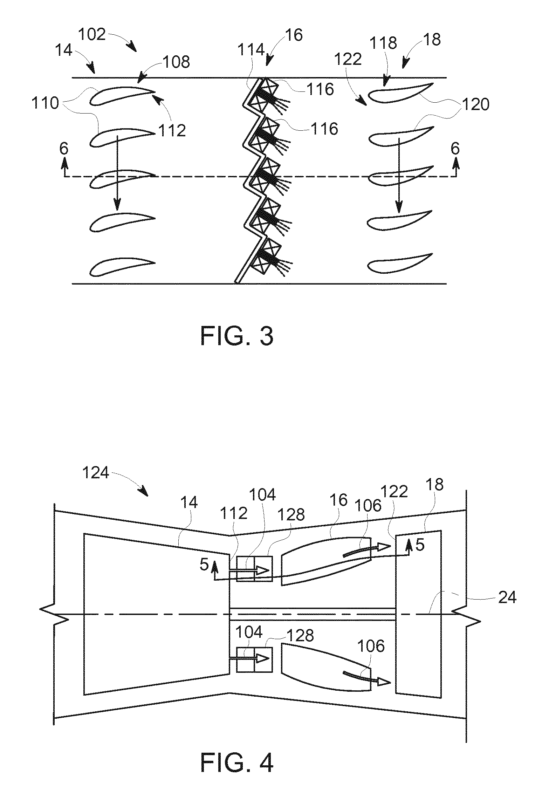

FIG. 2 is an enlarged schematic illustration of an exemplary combustion assembly 100 that may be used with gas turbine engine 10 (shown in FIG. 1), and FIG. 3 is a schematic illustration of an exemplary flow path 102 of combustion assembly 100 along line 3-3 (shown in FIG. 2). In the exemplary embodiment, compressor 14 discharges a flow of air 104 towards combustor 16, and combustor 16 combusts the flow of air 104 with fuel (not shown) to form a flow of combustion gas 106. The flow of combustion gas 106 is discharged from combustor 16 towards turbine 18.

Referring to FIG. 3, compressor 14 includes a row 108 of rotor blades 110 defining an outlet 112 of compressor 14. Rotor blades 110 are in a first fixed orientation relative to centerline 24 such that the flow of air 104 (each shown in FIG. 3) is discharged from compressor 14 at a first flow angle. As used herein, "flow angle" is defined as a ratio of circumferential velocity to axial velocity of a flow of fluid.

Combustor 16 is coupled downstream from compressor 14 and configured to combust the flow of air 104 with fuel to form the flow of combustion gas 106 discharged from combustor 16. More specifically, combustor 16 is a bulk swirl combustor in a second fixed orientation relative to centerline 24 such that the flow of combustion gas 106 is discharged from combustor 16 at a second flow angle. For example, in the exemplary embodiment, combustor 16 includes a corrugated combustor dome 114 and a plurality of combustion devices 116 coupled to corrugated combustor dome 114. As such, combustion devices 116 are in the second fixed orientation causing the flow of combustion gas 106 to be discharged at the second flow angle. The second fixed orientation is selected such that the second flow angle is within a predetermined range to satisfy the flow angle requirements of inlet 122, as will be described in more detail below. More specifically, the orientation of combustor 16 is selected as a function of a velocity gradient between the flow of air entering combustor 16 and the flow of combustion gas discharged from combustor 16. The velocity gradient is induced by the addition of heat during the combustion process. In an alternative embodiment, combustor 16 is any bulk swirl combustor that enables gas turbine engine 10 to function as described herein. For example, in some embodiments, combustor 16 includes a trapped vortex cavity configuration.

Turbine 18 is coupled downstream from combustor 16 and includes a row 118 of rotor blades 120 in a third fixed orientation defining an inlet 122 of turbine 18. Combustion gas 106 channeled towards turbine 18 needs to have a flow angle within a predetermined range to satisfy the flow angle requirements of inlet 122, and the predetermined range is based on an orientation of rotor blades 120. As described above, combustor 16 is in a second fixed orientation such that the flow of air 104 enters combustor 16 at the first flow angle, and the flow of combustion gas 106 is discharged from combustor 16 at the second flow angle. The orientation of combustor 16 is selected based on a difference between the first flow angle and the predetermined range, and an expected difference between flow angles of fluid entering and being discharged from combustor 16. As such, the second fixed orientation of combustor 16 is selected to ensure the second flow angle is within the predetermined range for satisfying the flow angle requirements of inlet 122.

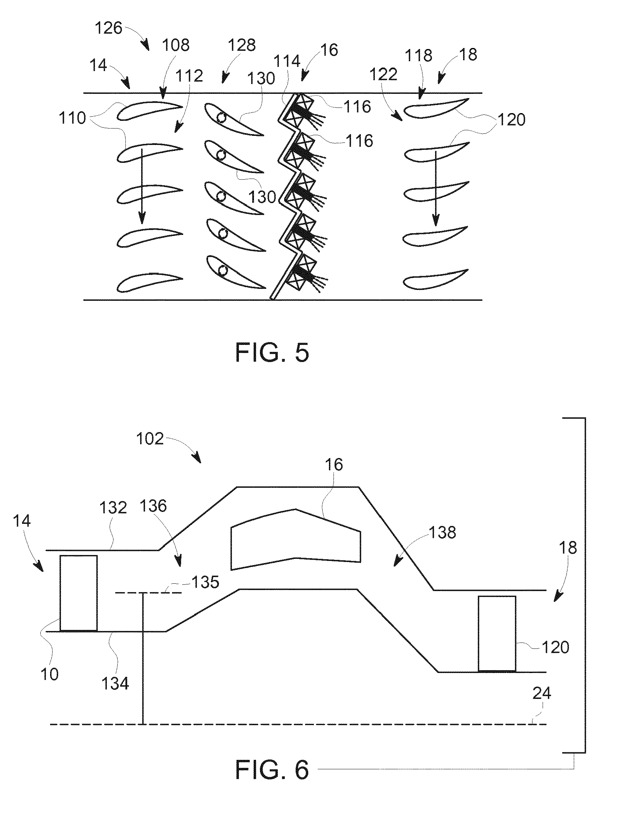

FIG. 4 is an enlarged schematic illustration of an alternative combustion assembly 124 that may be used with gas turbine engine 10 (shown in FIG. 1), and FIG. 5 is a schematic illustration of an exemplary flow path 126 of combustion assembly 124 along line 5-5 (shown in FIG. 4). In the exemplary embodiment, combustion assembly 124 includes a variable guide vane assembly 128 positioned between a last stage rotor (not shown) of compressor 14 and combustor 16. Variable guide vane assembly 128 includes a plurality of variable guide vanes 130. Variable guide vanes 130 are also selectively actuated based on the operating condition of gas turbine engine 10, as will be described in more detail below. In the exemplary embodiment, compressor 14 discharges a flow of air 104 through variable guide vane assembly 128 and towards combustor 16, and combustor 16 combusts the flow of air 104 with fuel (not shown) to form a flow of combustion gas 106. The flow of combustion gas 106 is discharged from combustor 16 towards turbine 18.

Variable guide vane assembly 128 is positioned between compressor 14 and combustor 16 to ensure the flow angle of combustion gas 106 channeled towards turbine 18 is within the predetermined range for inlet 122 across a wide range of operating conditions for gas turbine engine 10. When the first fixed orientation of rotor blades 110, the second fixed orientation of combustor 16, and the predetermined range of acceptable flow angles of fluid entering turbine 18 remain constant, variable guide vane assembly 128 is selectively operable to modify the flow angle of the flow of air 104 discharged from compressor 14 and channeled towards combustor 16.

Referring to FIG. 5, variable guide vanes 130 are selectively actuated to rotate about an axis (not shown) extending substantially radially from centerline 24 (shown in FIG. 4). For example, when gas turbine engine 10 (shown in FIG. 1) is in a steady state operational mode, variable guide vanes 130 actuate into a position such that the flow angle of the flow of air 104 discharged from combustor 16 is within the predetermined range for inlet 122. When gas turbine engine 10 is in an off-design operational mode, variable guide vanes 130 actuate into a position that modifies the flow angle of the flow of air 104 before entering combustor 16. As such, the orientation of variable guide vanes 130 is selected such that the second flow angle of the flow of combustion gas 106 discharged from combustor 16 is within the predetermined range for inlet 122.

FIG. 6 is a schematic illustration of flow path 102 along line 6-6 (shown in FIG. 3). In the exemplary embodiment, flow path 102 extends between compressor 14 and turbine 18 in a substantially axial direction along centerline 24. Flow path 102 is defined by an outer flow duct 132 and an inner flow duct 134. Flow path 102 also includes a variable cross-sectional area defined between outer and inner flow ducts 132 and 134 along the substantially axial direction. The outer and inner flow ducts 132 and 134 are tailored such that a mean radial location 135 extending therebetween, and a cross-sectional area defined therebetween, facilitates ensuring the flow angle of combustion gas 106 (shown in FIG. 2) is within the predetermined range for inlet 122.

For example, flow path 102 includes a first section 136 extending between compressor 14 and combustor 16, and a second section 138 extending between combustor 16 and turbine 18. The cross-sectional area of first section 136 progressively increases in size from compressor 14 to combustor 16, and the cross-sectional area of second section 138 progressively decreases in size from combustor 16 to turbine 18. Progressively increasing the cross-sectional area of first section 136 decelerates the flow of air 104 (shown in FIG. 3) channeled towards combustor 16, and progressively decreasing the cross-sectional area of second section 138 accelerates the flow of combustion gas 106 channeled towards turbine 18. As such, the swirl of the flows of fluid channeled through flow path 102 is selectively modified to ensure the second flow angle of combustion gas 106 is within the predetermined range for inlet 122.

The turbine engine and methods described herein relate to leveraging bulk swirl combustors to enable a component architecture of the turbine engine to be modified. In the exemplary embodiment, an orientation of a bulk swirl combustor is selected to ensure a flow of combustion gas discharged towards a turbine has a flow angle within a predetermined range. Leveraging bulk swirl combustors to satisfy flow angle requirements of the turbine enables removal of one or both of guide vanes and turbine nozzles positioned at opposing ends of the combustor. Moreover, in one embodiment, variable guide vanes or a variable-area turbine flow path is implemented to ensure flow angle requirements for the turbine are satisfied at a wide range of operational modes, for example.

An exemplary technical effect of the turbine engine and methods described herein includes at least one of: (a) removing redundant components from the turbine engine; (b) reducing a weight and length of the turbine engine; and (c) increasing an operational efficiency of the turbine engine.

Exemplary embodiments of the gas turbine engine are described above in detail. The assembly is not limited to the specific embodiments described herein, but rather, components of systems and/or steps of the methods may be utilized independently and separately from other components and/or steps described herein. For example, the configuration of components described herein may also be used in combination with other processes, and is not limited to practice with only gas turbine engines and related methods as described herein. Rather, the exemplary embodiment can be implemented and utilized in connection with many applications where leveraging bulk swirl combustion is desirable.

Although specific features of various embodiments of the present disclosure may be shown in some drawings and not in others, this is for convenience only. In accordance with the principles of embodiments of the present disclosure, any feature of a drawing may be referenced and/or claimed in combination with any feature of any other drawing.

This written description uses examples to disclose the embodiments of the present disclosure, and also to enable any person skilled in the art to practice embodiments of the present disclosure, including making and using any devices or systems and performing any incorporated methods. The patentable scope of the embodiments described herein is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A turbine engine comprising:
   a compressor configured to discharge a flow of air at a first flow angle;
   a combustor coupled downstream from said compressor, said combustor configured to combust the flow of air with fuel to form a flow of combustion gas discharged from said combustor at a second flow angle; and
   a turbine coupled downstream from said combustor, said turbine comprising an inlet configured to receive the flow of combustion gas having a flow angle within a predetermined range, wherein said combustor is oriented such that the second flow angle is within the predetermined range.
2. The turbine engine in accordance with clause 1 further comprising a variable guide vane positioned between said compressor and said combustor, wherein an orientation of said variable guide vane is selected such that the second flow angle is within the predetermined range.
3. The turbine engine in accordance with any preceding clause, wherein said variable guide vane is selectively actuated to modify the first flow angle of the flow of air channeled towards said combustor.
4. The turbine engine in accordance with any preceding clause, wherein said variable guide vane is positioned between a last stage rotor of said compressor and said combustor.
5. The turbine engine in accordance with any preceding clause, wherein said combustor comprises a bulk swirl combustor.
6. The turbine engine in accordance with any preceding clause further comprising a flow path extending between said compressor and said turbine in a substantially axial direction, said flow path comprising a variable cross-sectional area along the substantially axial direction, the variable cross-sectional area selected such that the second flow angle is within the predetermined range.
7. The turbine engine in accordance with any preceding clause, wherein said flow path comprises:
   a first section extending between said compressor and said combustor, wherein a cross-sectional area of said first section progressively increases in size from said compressor to said combustor; and
   a second section extending between said combustor and said turbine, wherein a cross-sectional area of said second section progressively decreases in size from said combustor to said turbine.
8. The turbine engine in accordance with any preceding clause, wherein said combustor is configured to discharge the flow of combustion gas at a greater velocity than a velocity of the flow of air discharged from said compressor.
9. The turbine engine in accordance with any preceding clause, wherein said combustor is oriented such that the second flow angle is within the predetermined range, an orientation of said combustor selected as a function of a velocity gradient between the flow of air entering said combustor and the flow of combustion gas discharged from said combustor.
10. The turbine engine in accordance with any preceding clause, wherein said turbine engine does not comprise a nozzle positioned between said combustor and said turbine.
11. A method of assembling a turbine engine, said method comprising:
   coupling a combustor downstream from a compressor configured to discharge a flow of air at a first flow angle, wherein the combustor is configured to combust the flow of air with fuel to form a flow of combustion gas configured to discharge from the combustor at a second flow angle;
   coupling a turbine downstream from the combustor, the turbine comprising an inlet configured to receive the flow of combustion gas from the combustor having a flow angle within a predetermined range; and
   orienting the combustor such that the second flow angle is within the predetermined range.
12. The method in accordance with any preceding clause further comprising positioning a variable guide vane between the compressor and the combustor, wherein an orientation of the variable guide vane is selected such that the second flow angle is within the predetermined range.
13. The method in accordance with any preceding clause further comprising configuring the variable guide vane to be selectively actuated to modify the first flow angle of the flow of air channeled towards the combustor.
14. The method in accordance with any preceding clause, wherein positioning a variable guide vane comprises positioning the variable guide vane between a last stage rotor of the compressor and the combustor.
15. The method in accordance with any preceding clause, wherein coupling the combustor comprises orienting the combustor in a second fixed orientation relative to a centerline of the turbine engine.
16. The method in accordance with any preceding clause further comprising defining a flow path that extends between the compressor and the turbine in a substantially axial direction, the flow path comprising a variable cross-sectional area along the substantially axial direction, the variable cross-sectional area selected such that the second flow angle is within the predetermined range.
17. The method in accordance with any preceding clause further comprising:
   extending a first section of the flow path between the compressor and the combustor, wherein a cross-sectional area of the flow path progressively increases in size from the compressor to the combustor; and
   extending a second section of the flow path between the combustor and the turbine, wherein a cross-sectional area of the flow path progressively decreases in size from the combustor to the turbine.
18. The method in accordance with any preceding clause further comprising configuring the combustor to discharge the flow of combustion gas at a greater velocity than a velocity of the flow of air discharged from the compressor.
19. The method in accordance with any preceding clause, wherein configuring the combustor comprises orienting the combustor such that the second flow angle is within the predetermined range, an orientation of said combustor selected as a function of a velocity gradient between the flow of air entering the combustor and the flow of combustion gas discharged from the combustor.
20. The method in accordance with any preceding clause, wherein coupling a turbine comprises coupling the turbine downstream from the combustor such that the flow of combustion gas is channeled directly towards the inlet of the turbine.

## Claims

1. A turbine engine (10) comprising:
a compressor (14) configured to discharge a flow of air (104) at a first flow angle;
a combustor (16) coupled downstream from said compressor (14), said combustor (16) configured to combust the flow of air (104) with fuel to form a flow of combustion gas (106) discharged from said combustor (16) at a second flow angle; and
a turbine (18) coupled downstream from said combustor (16), said turbine (18) comprising an inlet (122) configured to receive the flow of combustion gas (106) having a flow angle within a predetermined range, wherein said combustor (16) is oriented such that the second flow angle is within the predetermined range.

2. The turbine engine (10) in accordance with claim 1 further comprising a variable guide vane (130) positioned between said compressor (14) and said combustor (16), wherein an orientation of said variable guide vane (130) is selected such that the second flow angle is within the predetermined range.

3. The turbine engine (10) in accordance with claim 2, wherein said variable guide vane (130) is selectively actuated to modify the first flow angle of the flow of air (104) channeled towards said combustor (16).

4. The turbine engine (10) in accordance with claim 2 or 3, wherein said variable guide vane (130) is positioned between a last stage rotor (110) of said compressor (14) and said combustor (16).

5. The turbine engine (10) in accordance with claim 2, 3 or 4, wherein said combustor (16) comprises a bulk swirl combustor.

6. The turbine engine (10) in accordance with any preceding claim further comprising a flow path (126) extending between said compressor (14) and said turbine (18) in a substantially axial direction, said flow path (126) comprising a variable cross-sectional area along the substantially axial direction, the variable cross-sectional area selected such that the second flow angle is within the predetermined range.

7. The turbine engine (10) in accordance with claim 6, wherein said flow path (126) comprises:
a first section (136) extending between said compressor (14) and said combustor (16), wherein a cross-sectional area of said first section (136) progressively increases in size from said compressor (14) to said combustor (16); and
a second section (138) extending between said combustor (16) and said turbine, wherein a cross-sectional area of said second section (138) progressively decreases in size from said combustor (16) to said turbine (18).

8. The turbine engine (10) in accordance with any preceding claim, wherein said combustor (16) is configured to discharge the flow of combustion gas (106) at a greater velocity than a velocity of the flow of air (104) discharged from said compressor (14).

9. The turbine engine (10) in accordance with claim 8, wherein said combustor (16) is oriented such that the second flow angle is within the predetermined range, an orientation of said combustor (16) selected as a function of a velocity gradient between the flow of air (104) entering said combustor (16) and the flow of combustion gas (106) discharged from said combustor (16).

10. The turbine engine (10) in accordance with any preceding claim, wherein said turbine engine (10) does not comprise a nozzle positioned between said combustor (16) and said turbine.

11. A method of assembling a turbine engine, said method comprising:
coupling a combustor downstream from a compressor configured to discharge a flow of air at a first flow angle, wherein the combustor is configured to combust the flow of air with fuel to form a flow of combustion gas configured to discharge from the combustor at a second flow angle;
coupling a turbine downstream from the combustor, the turbine comprising an inlet configured to receive the flow of combustion gas from the combustor having a flow angle within a predetermined range; and
orienting the combustor such that the second flow angle is within the predetermined range.
